(19) Europäisches Patentamt
European Patent Office
Office européen des brevets

(11) **EP 2 787 424 B1**

(12) **EUROPEAN PATENT SPECIFICATION**

(45) Date of publication and mention
of the grant of the patent:
**19.09.2018 Bulletin 2018/38**

(51) Int Cl.:
*G06F 3/0482* (2013.01)        *G06F 3/0488* (2013.01)
*G06F 17/30* (2006.01)        *H04M 1/725* (2006.01)
*H04W 4/14* (2009.01)

(21) Application number: **14162884.2**

(22) Date of filing: **31.03.2014**

(54) **Method and apparatus for processing file in portable terminal**

Verfahren und Vorrichtung zur Verarbeitung einer Datei in einem tragbaren Endgerät

Procédé et appareil de traitement de fichier dans un terminal portable

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2013 KR 20130036767**

(43) Date of publication of application:
**08.10.2014 Bulletin 2014/41**

(73) Proprietor: **Samsung Electronics Co., Ltd.
Suwon-si Gyeonggi-do 443-742 (KR)**

(72) Inventor: **Choi, Hyunsuk
443-742 Gyeonggi-do (KR)**

(74) Representative: **HGF Limited
Saviour House
9 St. Saviourgate
York YO1 8NQ (GB)**

(56) References cited:
**WO-A1-2012/177192      WO-A2-01/59591
US-A1- 2008 250 190      US-A1- 2012 060 102
US-A1- 2012 324 002**

• **Lori Kaufman: "How to Create a Folder from
Selected Files in Windows", , 27 September 2012
(2012-09-27), XP055307236, Retrieved from the
Internet:
URL:http://www.howtogeek.com/125360/how-to
-create-a-folder-from-selected-files-in-wi ndows/
[retrieved on 2016-10-03]**

**Description**

## BACKGROUND OF THE INVENTION

### 1. Field of the Invention

The present invention relates generally to a method and an apparatus for processing a file in a portable terminal, and more particularly, to a method and an apparatus, which, in a portable terminal, enable a user to select multiple file groups, to intuitively and easily use a file processing option matched to each file group, and to simultaneously process the multiple file processing options.

### 2. Description of the Related Art

Recently, with the widespread use of information devices such as portable terminals and the like (e.g., mobile phones, digital cameras, Moving Picture Experts Group Audio Layer-3 (MP3) players, etc.), there is an increasing interest in a flash memory which is a necessary part of such a portable terminal. Accordingly, the capacity of a flash memory has gradually increased together with an increase in the flash memory market. The flash memory has a characteristic such that the stored information is not lost but retained even when power is shut off, differently from a well-known Dynamic Random Access Memory (DRAM). The flash memory is installed in an MP3 player, a digital camera, a mobile phone, a Personal Digital Assistant (PDA), and the like, which require a small-sized memory having a large capacity. A Solid State Drive (SSD) which replaces a computer hard drive also includes a flash memory.

Particularly, as a flash memory applied to a portable terminal has gradually evolved so as to have a fast data processing speed, and has evolved so as to be highly integrated and have a large capacity, the amount of files used in the portable terminal has also increased. When the number of files becomes large and diversified in a portable terminal of a user, the user feels the need to organize files, due to a limit to the capacity of a flash memory and a problem of having difficulty in easily finding a desired file.

According to the above-described need, when data files having various characteristics are scattered across folders in the portable terminal, the user of the portable terminal selects files and creates a file group, and processes the file group in such a manner so as to move, copy, transmit, delete, edit or reproduce (referred to as a "file processing option") the file group. However, the user can process one file group at a time, and can perform only a file processing option matched to one file group. For example, when a photograph file is moved from an A folder to a B folder and a document file is copied from the A folder to a C folder, a problem arises in that the user needs to separately perform a process for moving a photograph file from the A folder to the B folder and a process for copying a document file from the A folder to the C folder. Also, inconvenience arises in that the user needs to return back to the A folder after moving the photograph file from the A folder to the B folder.

Typically, the user identifies a file before performing a file processing option (e.g., copy, movement, deletion, execution, edit, etc.) on the relevant file. However, files are automatically arranged after the user performs the file processing option on the file, and the placement of files before the user performs the file processing option on the file is different from that of files at a time point when the user is to identify the files. Therefore, a problem arises in that it is easy for the user to confuse are file with another file.

US 2008/250190 discloses a portable operating system for use by a user on a portable memory device, the system being accessible by the user on a primary host computer having a host graphical user interface. The system includes a portable graphical user interface accessible by the user when the portable memory device is placed into communication with the primary host computer, at least one portable application executable by the user via the portable graphical user interface, and a file system accessible by the user. Dragging at least one file from a host graphical user interface of the primary host computer to the portable graphical user interface activates a file system to transfer files into respective portable file folders corresponding to the respective filetype.

## SUMMARY OF THE INVENTION

The present invention has been made to address the above problems and disadvantages, and to provide at least the advantages described below. Accordingly, an aspect of the present invention provides a method and an apparatus according to the appended claims.

## BRIEF DESCRIPTION OF THE DRAWINGS

The above and other aspects, features and advantages of the present invention will be more apparent from the following detailed description in conjunction with the accompanying drawings, in which:

FIG. 1 is a block diagram schematically illustrating a configuration of a portable terminal for processing a file according to an embodiment of the present invention;

FIG. 2 is a flowchart illustrating a process for processing a file in a portable terminal according to an embodiment of the present invention;

FIG. 3 is a flowchart illustrating in more detail a process for performing a file processing option on file groups corresponding to the process illustrated in FIG. 2, according to an embodiment of the present invention;

FIGs. 4A and 4B are screen views of a User Interface (UI) illustrating a process for selecting files and performing a file processing option on the selected files, according to an embodiment of the present invention;

FIG. 5 is a view illustrating a folder structure in the form of a tree in a portable terminal according to an embodiment of the present invention;

FIGs. 6A and 6B are screen views of a UI illustrating a process for transmitting files, the transmission of which has been selected, to other portable terminals according to an embodiment of the present invention;

FIG. 7 is a screen views of a UI illustrating a process for transmitting files, the transmission of which has been selected, to other portable terminals according to another embodiment of the present invention;

FIG. 8 is a flowchart illustrating a process for transmitting the selected files to multiple persons according to the process illustrated in FIG. 6, according to an embodiment of the present invention; and

FIG. 9 is a flowchart illustrating a process for transmitting the selected files to multiple persons according to the process illustrated in FIG. 7, according to another embodiment of the present invention.

## DETAILED DESCRIPTION OF EMBODIMENTS OF THE PRESENT INVENTION

Hereinafter, embodiments of the present invention will be described in detail with reference to the accompanying drawings. It should be noted that the same elements will be designated by the same reference numerals although they are shown in different drawings. Further, in the following description of the present invention, a detailed description of known functions and configurations incorporated herein will be omitted when it may make the subject matter of the present invention unclear.

Meanwhile, embodiments of the present invention shown and described in this specification and the drawings correspond to specific examples presented in order to easily explain the technical contents of the present invention, and to help comprehension of the present invention, but are not intended to limit the scope of the present invention.

In embodiments of the present invention, the term "file" refers to a file configured in a portable terminal which can be processed according to a file processing option, the term "grouping" refers to designating one or more groups for files having an identical extension or different extensions, and the term "file group" refers to groups created by grouping. Meanwhile, for convenience of description, although the grouped files are described as a file group, a folder may be included in a file group.

In embodiments of the present invention, a first folder is only a name of a folder which is optionally determined for convenience of description, and will be referred to as a folder including files on which a file processing option is to be performed. Also, a second folder is a name of a folder which is optionally determined for convenience of description, and will be referred to as a folder to which a file processing option of a relevant file group is to be performed.

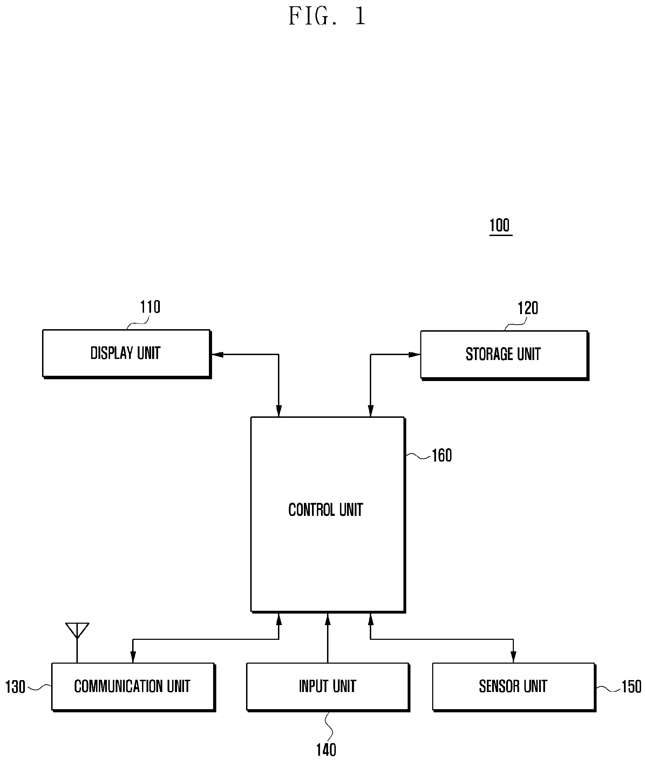

FIG. 1 is a block diagram schematically illustrating a configuration of a portable terminal for processing a file according to an embodiment of the present invention.

Referring to FIG. 1, the portable terminal 100 includes a display unit 110, a storage unit 120, a communication unit 130, an input unit 140, a sensor unit 150, and a control unit 160. In addition, the portable terminal 100 may include an audio module that outputs various audio data, the output of which is required during an operation process of the portable terminal 100, and may further include elements, such as a camera module for a function of capturing a photograph/moving image, and the like. However, a description and illustration of these elements will be omitted.

The display unit 110 provides execution screens of applications supporting the portable terminal 100. For example, the display unit 110 provides execution screens, such as a file display function, a file search function, a message function, an electronic mail function, an Internet function, a multimedia function, a photograph view function, a music reproduction function, and the like. The display unit 110 may use a display device, such as a Liquid Crystal Display (LCD), an Organic Light Emitting Diode (OLED) display, or the like.

The display unit 110 may distinguish a file group (e.g., which includes multiple files or folders) from another file group by displaying edges of files in different colors, by displaying a number matched to a group at a part where a check bar is set, or by displaying files which have been set as a group in such a manner as to be engraved or embossed (i.e., displayed so as to appear to be embossed or engraved compared with other files). Alternatively, the display unit 110 may arrange the files which have been set as a group as described above, and may display the arranged files. For example, when a first group is represented in a corresponding red color, each of files classified as belonging to the first group may be represented by using a red edge or a red check mark. Accordingly, it is possible to increase intuitiveness in order to distinguish the first group from another group.

The storage unit 120 stores various programs and data that the portable terminal 100 executes and processes, and includes one or more volatile memory devices (e.g., a Dynamic Random Access Memory (DRAM)) and a non-volatile memory device (e.g., a flash memory). The storage unit 120 stores an Operating System (OS) of the portable terminal 100 and files in various forms. The storage unit 120 may store a program which groups files and performs a file processing option on the grouped files, a program and data which are related to an input for selecting a file processing option, and the like.

The communication unit 130 is an element which may be added to the portable terminal 100 when the portable terminal 100 supports a communication function. In contrast, when the portable terminal 100 does not support the communication function, the communication unit 130 may be omitted. The communication unit 130 is configured in the form of a mobile communication module capable of forming a communication channel with a base station in order to support the communication function of the portable terminal 100. The communication unit 130 supports the portable terminal 100 so as to receive information including a file from the outside according to the control of the user or according to preset schedule information, or supports the portable terminal 100 so as to transmit information, that the portable terminal 100 has collected, to the outside. Also, the communication unit 130 may include a communication module supporting a short-range communication function. The communication unit 130 may support the portable terminal 100 so as to form a short-range communication channel with another terminal and transmits the stored information, particularly, a file or folder, to another terminal through the communication module.

The input unit 140 has a configuration for generating various input signals required to operate the portable terminal 100. The input unit 140 includes a home key, a side key, a menu key, a back key, and the like. The input unit 140 may include various input means, such as a keyboard, a keypad, key buttons and the like, depending on whether the input unit 140 is compatible with the portable terminal 100. Also, when the display unit 110 operates as a touch screen, the input unit 140 receives an input through the touch screen. Particularly, according to an embodiment of the present invention, the input unit 140 enables the user to select files and designate a file group for the selected files through the touch screen. Also, when the user presses a menu key after one or more file groups are designated, a menu named "file group addition" pops-up on the display unit 110. When the user selects the pop-up menu "file group addition" and selects files matched to each file group, the user can designate the multiple file groups.

When the touch screen is used, the touch screen displays a group selection menu on a User Interface (UI), and enables the user to select the group selection menu and select files for each group. For example, through a touch by the user or a touch by a touch pen which is input through the touch screen, files may be individually designated or may be designated as a group, and the touch screen receives an input corresponding to the touch for executing a file processing option, such as movement, copy, transmission, deletion, editing, or reproduction.

Meanwhile, file groups may be distinguished from each other through a process for selecting a file group. For example, file groups may be distinguished from each other by using a combination of a home key, a side key, a menu key, a back key and a touch. For example, when the side key or the touch causes files to transition between them and files or folders are selected by using the home key, the selected files or the selected folders may be classified so as to form a first group. When the side key or the touch causes files or folders to transition between them and files or folders are selected by using the menu key, the selected files or the selected folders may be classified so as to form a second group. Similarly, when the side key or the touch causes files to transition between them and a touch is used, the selected files may be classified so as to form a third group.

Alternatively, file groups may be distinguished from each other by using the number of times of touching or tapping a file on the touch screen. For example, a file which has been quickly touched once (a single tap) may be classified so as to belong to a first group, a file which has been quickly touched twice (a double tap) may be classified so as to belong to a second group, and a file which has been quickly touched three times (a triple tap) may be classified so as to belong to a third group. In the present example, it is desirable that at least one touch according to the number of times of touch is configured to be performed within a predetermined time period. Alternatively, file groups may be distinguished from each other according to a time period for maintaining a predetermined touch. For example, when the touch of a file is maintained within 2 seconds, the file may be designated as belonging to a first group. When the touch of a file is maintained during a time period which exceeds 2 seconds and is less than 4 seconds, the file may be designated as belonging to a second group. When the touch of a file is maintained within 6 seconds, the file may be designated as belonging to a third group.

Alternatively, file groups may be distinguished from each other by using a sensor. For example, when a gyro sensor is used, file groups may be distinguished from each other according to an angle at which the portable terminal 100 tilts forward. For example, files which are selected in a state of causing the portable terminal 100 to stand at an angle of 90 degrees to 60 degrees with respect to the surface of the earth as a reference may be configured to belong to a first group. Files which are selected in a state of causing the portable terminal 100 to stand at an angle less than 60 degrees and greater than or equal to 30 degrees with respect to the surface of the earth as a reference may be configured to belong to a second group. Similarly, files which are selected in a state of causing the portable terminal 100 to stand at an angle less than 30 degrees with respect to the surface of the earth as a reference may be configured to belong to a third group. File groups may also be distinguished from each other by using another sensor included in the portable terminal 100. Alternatively, file groups may be distinguished from each other by using a combination of such sensors included in the portable terminal 100.

Alternatively, file groups may be distinguished from each other by using a touch gesture. For example, when a file is dragged to the right in a state of touching the file, the file may be classified so as to belong to a first group. In contrast, when a file is dragged to the left in a state of touching the file, the file may be classified so as to belong to a second group. When a file is dragged upwards in a state of touching the file, the file may be classified so as to belong to a third group. In contrast, when a file is dragged downwards in a state of touching the file, the file may be classified so as to belong to a fourth group. It is noted that when such a touch gesture is used, it is difficult to control a fine operation. Accordingly, in order to prevent the occurrence of page movement or other unexpected events, an electronic pen for a touch screen may be used to effect the dragging motion instead of the touch gesture using a finger.

The sensor unit 150 may include the above-described gyro sensor, and may include an acceleration sensor, a proximity sensor, an illuminance sensor, and the like. File groups may be distinguished from each other according to the function of a sensor. For example, although the gyro sensor is described above as an example, such sensors may operate in conjunction with each other. Accordingly, when such sensors are applied to embodiments of the present invention, it is possible to configure the sensors in such a manner so as to combine them and cause the combined sensors to operate. For example, the acceleration sensor detects the displacement of the portable terminal 100, and each group may be formed differently depending on files selected in response to the changed displacement. For example, files selected after the portable terminal 100 is shaken once may be designated as a first group. Files selected after the portable terminal 100 is shaken twice may be designated as a second group, and so forth.

When a selection is made of a relevant folder which is to perform a file processing option on file groups, the control unit 160 allows automatic transition to a folder (i.e., a first folder) including the file groups. At this time, the execution of the file processing option causes automatic transition to a folder including files which have been first selected by grouping, and displays a file edit mode. Accordingly, in the file edit mode, file groups to each of which only a file has been added may be processed according to the file processing option, or file groups from each of which a file to be excluded has been selectively excluded may be processed according to the file processing option. The file groups are simultaneously processed.

First, for convenience of description, a case will be described in which a file processing option is the movement of a file. In this case, when the user classifies files existing in a first folder into three file groups and moves the three file groups to a second folder which is a destination folder, the control unit 160 automatically generates three file folders matched to the three file groups under the second folder and processes the three file groups according to a file processing option. The user first moves the first folder including files intended to be moved. When the user selects a file processing option (e.g., movement) in the first folder, the control unit 160 generates an event enabling the selection of a file, so that the user can select files and can designate a file group for the selected files. When two more file groups are created as described above, file groups, particularly, a first file group, a second file group and a third file group, are created.

The control unit 160 performs a control operation for switching to an event enabling transition to a folder to which a file processing option of each file group is intended to be performed. Accordingly, the control unit 160 processes transition to the second folder according to an input or a touch by the user. When the user inputs a command matched to a touch bar through the touch bar or the input unit 140 which expresses or displays a command (e.g., "identification" or "movement") that the touch screen displays on the second folder, the control unit 160 performs a control operation for automatically transitioning to a screen displaying the first folder in a state where the control unit 160 does not perform a file processing option on each file group. As described above, each file group is in a state where the file processing option corresponding to movement is scheduled to be performed on each file group, and the control unit 160 performs a control operation for displaying the first folder.

In the present example, the first folder displays an edit mode, in which a file may be added or excluded to/from a file group selected from among multiple file groups. When the user selects a file processing option (e.g., a touch bar expressing "processing" or "movement") existing in the first folder, the file groups are processed so as to be simultaneously moved to relevant folders which are respectively matched to the file groups. At this time, because each file group is processed so as to be moved to the second folder, the control unit 160 performs a control operation for displaying an area, in which files belonging to each file group have been located, as being in an empty state in the first folder, and performs a control operation for fixedly placing files, which are not moved, at the original positions. Accordingly, the control unit 160 improves the visible intuitiveness of the user. Meanwhile, the control unit 160 performs a control operation for creating a folder named "1," a folder named "2," and a folder named "3" under the second folder, and performs a control operation for simultaneously moving files of the first file group, those of the second file group and those of the third file group to folder 1, folder 2 and folder 3, respectively. For convenience of description, movement of files has been described, but each file processing option may be similar to or may be slightly different in process from the above-described movement option.

Also, when a file processing option, particularly, movement, copy or transmission, is performed on each file group as described above, if a folder generation function is performed after causing each file group to transition to a destination folder, as many folders as the number of the file groups are generated. When a folder is generated, the user may generate a folder in a name matched to each relevant group, or the portable terminal 100 may automatically generate a folder. When a folder is automatically generated, the name of each folder may be designated as a part of the name or the entire name of a first file which has been grouped, a sequential name, or a random name. After the folders to each of which a file processing option of a relevant file group is to be performed are respectively matched to the file groups as described above, when the user inputs a command matching the execution of a file processing option, the file processing options of the file groups to the respective folders are simultaneously performed. For example, movement, copy or transmission are performed on a relevant file group.

File processing options may be simultaneously performed on file groups by shaking the portable terminal 100. For example, after the file processing options are respectively matched to the file groups as described above, when the portable terminal 100 is shaken with a predetermined strength during a predetermined time period instead of pressing an execution key for performing a file processing option, the acceleration sensor of the sensor unit 150 senses the displacement of the portable terminal 100, and generates a shaking signal. The control unit 160 simultaneously performs file processing options, which are respectively matched to the file groups, of the file groups to folders, which are respectively matched to the file groups, according to a shaking signal. After the file processing options are performed according to the shaking signal, the first folder is displayed. At this time, when folders are not designated for file groups, the control unit 160 causes the folders to be automatically generated simultaneously with performing the file processing options.

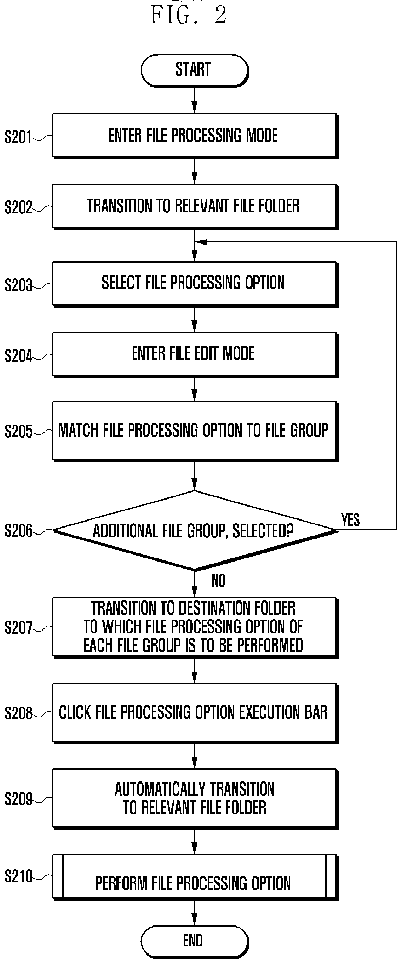

FIG. 2 is a flowchart illustrating a process for processing a file in a portable terminal according to an embodiment of the present invention. Referring to FIG. 2, in step S201, the control unit 160 enters a file processing mode. When the control unit 160 receives, from the user, an input or a touch for transitioning to a relevant file folder a "first folder") in which files on which a file processing option is to be performed are located, the control unit 160 controls transition to the first folder in step S202.

In step S203, the user opens a menu window by manipulating a menu key of the input unit 140, and selects a relevant file processing option. In step S204, after the user selects the relevant file processing option, the process enters a file edit mode, in which the user can select a file, a file group or file groups matched to the file processing option. In step S205, when the user checks one or more files or a check area of a folder, the control unit 160 selects the checked one or more files or the checked folder as a file group, and matches the selected one or more files, or the selected folder, to the selected file processing option.

In step S206, the control unit 160 determines whether a file group has been added. For example, the control unit 160 displays a pop-up window indicating "file group addition" when the user presses a menu key, and the control unit 160 enables the addition of a file group when the user selects the pop-up window indicating "file group addition." When a file group has been added, the control unit 160 returns to step 203, in which a file processing option is selected.

When the user designates both file processing options and file groups respectively matched to the file processing options and clicks a file processing option execution bar (e.g., "movement") in order to process each relevant file processing option, the control unit 160 moves to a root folder (e.g., /sdcard) of an Operating System (OS).

If not additional file group is added in step S206, the control unit proceeds to step S207. In step S207, the user transitions to a destination folder (hereinafter, briefly a "second folder"), to which a file processing option of each file group is to be performed, in a manner such as to click a file, or in another manner. In step S207, the user may respectively designate folders, in which the file groups are to be stored, for the file groups and thereby may previously generate the folders. Alternatively, as in the following step, the control unit 160 may automatically generate folders, the number of which corresponds to the number of the file groups. In step S208, when the user clicks a file processing option execution bar (e.g., "move to"), the control unit 160 memorizes the second folder, and automatically controls transition to the first folder in step S209.

In the present example, although the user selects the processing of each file processing option, each file processing option is actually in a state where each file processing option is not processed. Also, the process is in a state where each file processing option has been selected, and is in a state of causing the relevant file group to transition to the selected first folder. At this time, a screen displaying the first folder is displayed in a state where files selected according the relevant file processing option can be edited.

In the edit state, the control unit 160 determines whether a missing file exists in each file group, whether there exists a file which is unnecessarily included in each file group, or the like. Based on a result of the determination, the user may additionally select a file, or may exclude a selected file from each file group.

In step S210, the control unit 160 performs the file processing option of each file group to a folder designated for each file group in response to an input made by the user for execution of a file processing option. In step S210, for example, the control unit 160 may recognize a shaking signal generated in response to shaking the portable terminal 100 as the input for execution of each file processing option by the user, and performs the relevant file processing option on each file group.

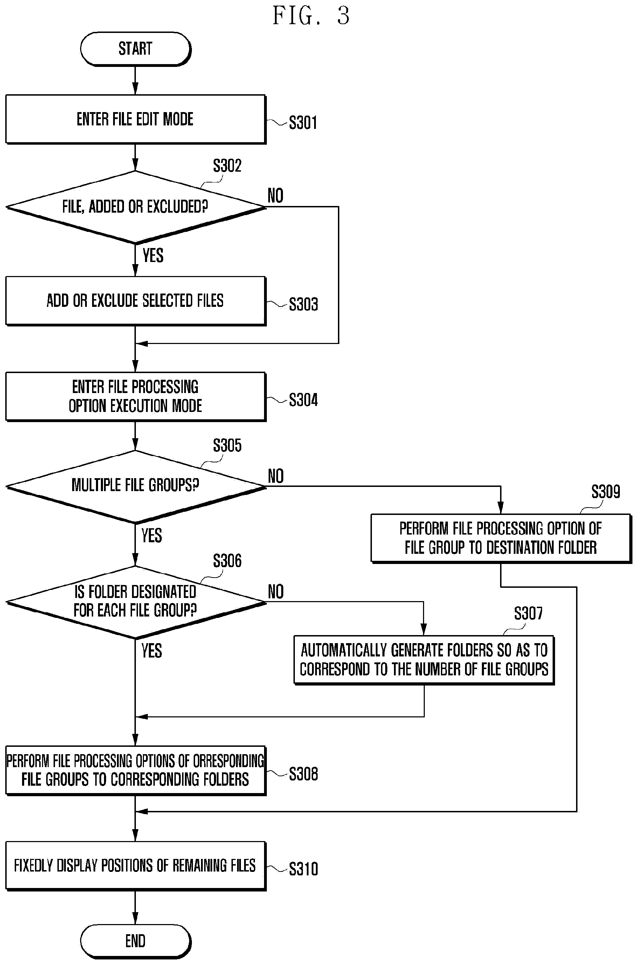

FIG. 3 is a flowchart illustrating in greater detail a process for performing a file processing option on file groups corresponding to the process illustrated in FIG. 2, according to an embodiment of the present invention. Step S210 illustrated in FIG. 2 will be described in more detail with reference to FIG. 3. When the process transitions to the first folder in step S209 illustrated in FIG. 2, the control unit 160 enters a file edit mode in step S301, and performs a control operation for displaying files, which exist in the first folder, in the file edit mode.

In step S302, the control unit 160 determines whether the user has input a command for adding or excluding a file or files (a "file") to/from at least one of the file groups in a state of display of the file edit mode. When the control unit 160 determines in step S302 that the user has added or excluded a file to/from the relevant file group, the control unit 160 performs a control operation for adding or excluding the selected file to/from the relevant file group, in step S303. For example, when the user adds a file to a relevant file group, if the user presses a menu key, the control unit 160 performs a control operation for displaying a menu enabling the selection of one of the file groups in a pop-up window. When the user selects a desired file group among the file groups and checks a desired file, the user can add the desired file to the desired file group. When the user excludes the file from the relevant file group, if the user selects the relevant file once again, a check mark disappears, and the relevant file is excluded from the relevant file group.

Meanwhile, when the control unit 160 determines in step S302 that the file edit is not performed, or when the user inputs a file processing option execution key (e.g., "movement" or "processing") after the file is added or excluded to/from the relevant file group in step S303, the control unit 160 terminates the file edit mode and enters a file processing option execution mode, in step S304.

In step S305, the control unit 160 determines whether file processing options have been designated so as to be matched to the multiple file groups. When the control unit 160 determines in step S305 that the file processing options have been designated so as to be matched to the multiple file groups, in step S306, the control unit 160 determines whether a folder is designated for each file group. When the control unit 160 determines in step S306 that the user designates folders on each of which a file processing option is to be performed (as in step S206 illustrated in FIG. 2), in step S308, the control unit 160 performs the file processing options of the file groups to folders which are respectively matched to the file groups. When the control unit 160 determines in step S306 that the user has not designated the folders to each of which the file processing option of the relevant file group is to be performed (as in step S207 illustrated in FIG. 2), in step S307, the control unit 160 automatically generates folders, the number of which corresponds to the number of the file groups, under a destination folder (i.e., a second folder), and proceeds to step S308. In step S308, the control unit 160 performs the file processing options of the file groups to the folders which are respectively matched to the file groups.

Meanwhile, when the control unit 160 determines in step S305 that a selected file group is one file group instead of multiple file groups, in step S309, the control unit 160 performs the file processing option of the selected file group to the second folder (as selected in step S206 illustrated in FIG. 2).

In step S310, the control unit 160 fixedly displays positions of files remaining after the file processing options of the designated file groups are performed in the first folder. For example, the control unit 160 performs a control operation for displaying an area, in which files moved in a state of belonging to each file group have been located, as being in an empty state, and performs a control operation for placing files, which are not moved, without any change in the positions thereof before the files belonging to each file group are moved. As described above, the files are not re-arranged but are placed without any change in the positions thereof before the files belonging to each file group are moved, so that the visible intuitiveness of the user can be improved.

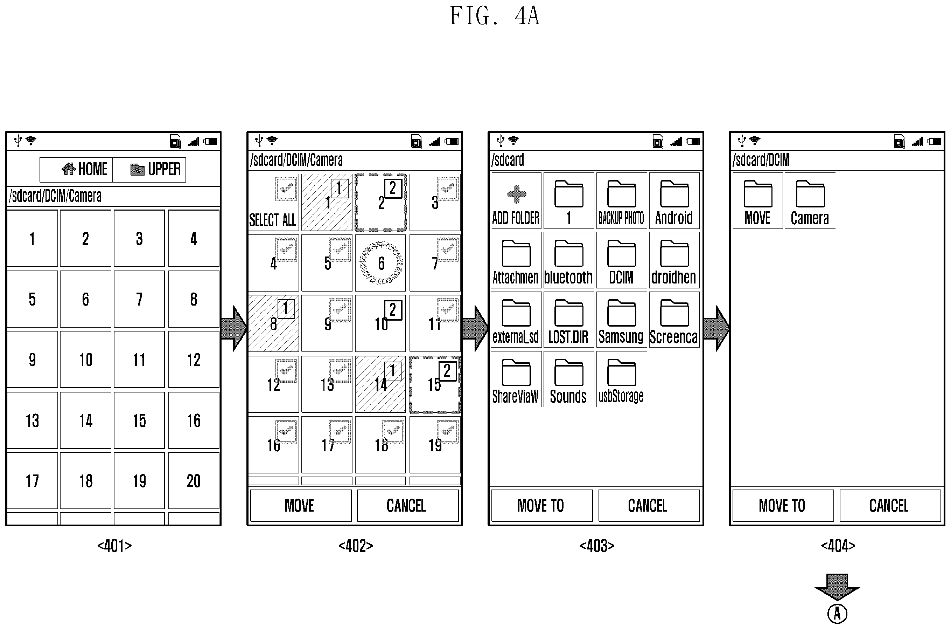

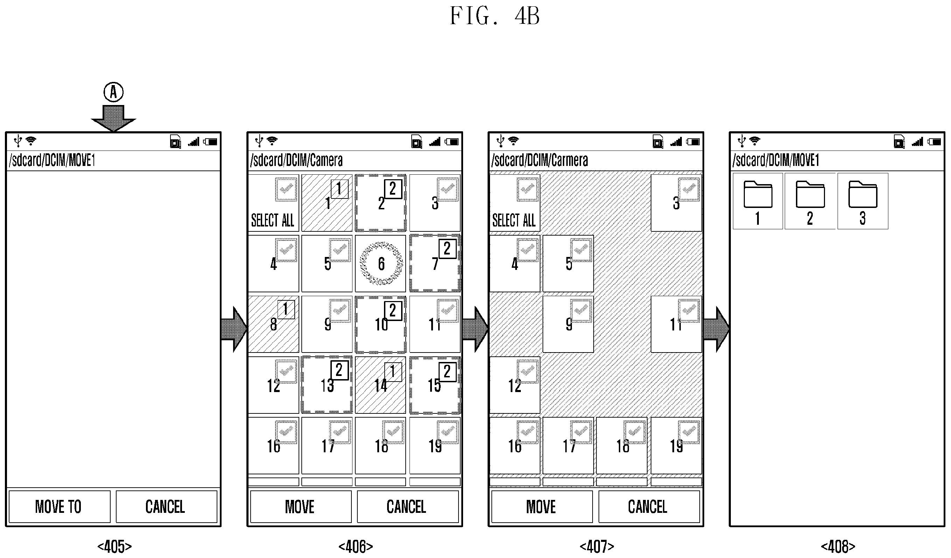

FIGs. 4A and 4B are screen views of a User Interface (UI) illustrating a process for selecting files and performing a file processing option on the selected files, according to an embodiment of the present invention. FIGs. 4A and 4B illustrate a folder structure. However, the transmission of a file and the management thereof will be similarly applied in all operating systems, such as Android, iOS, Windows, Bada, Blackberry, Symbian, and the like. Meanwhile, screen 401 of FIG. 4A illustrates a state of transition from a root (i.e., home) folder named "/sdcard" to a folder (i.e., a first folder) named "/sdcard/DCIM/Camera" including files, on which a file processing option is to be performed, according to an input by the user. The first folder typically stores still images or moving images that the portable terminal 100 has captured, but may include other files or folders in process of file management. For example, the first folder may include a document file, a voice file, a music file, a content file, an installation file, and the like.

Screen 402 of FIG. 4A illustrates an embodiment of the present invention in which movement is selected from among file processing options. Referring to screen 402 of FIG. 4A, after the movement is selected, a file edit mode is displayed. When the user selects files in the file edit mode, a first file group which is formed by the files, folders, or coexisting files and folders is designated. When the user selects a file processing option (e.g., movement) by again pressing a menu key and the like, the file edit mode is again displayed. When the user selects files, a second file group formed by the selected files is designated. Next, when the user selects a file processing option (e.g., movement) by pressing the menu key and the like once again, the file edit mode is displayed once again. When the user selects files, a third file group formed by the selected files is designated. Through the above-described file group selection process, files are selected and classified into the first file group, the second file group and the third file group, which are respectively matched to the movements in the file group selection process. Although the three file groups are displayed and the movement is set for all three file groups in screen 402 of FIG. 4A, different file processing options may be respectively matched to the file groups. Also, during the file group designation process, file groups may be separately designated by using different input means or different input time periods in the file edit mode, as described above with reference to FIG. 1.

In screen 402 of FIG. 4A, the files selected as the first file group are represented by using hatching, the files selected as the second file group are represented by using a quadrangular frame, and the files selected as the third file group are represented by drawing a circle within a display area expressing each file. However, with respect to the representation used to distinguish between the file groups, the file groups may be intuitively distinguished from each other in such a manner as to represent frames of display areas respectively expressing the files in different colors.

Alternatively, a display area expressing a selected file may be displayed so as to be embossed (i.e., displayed so as to appear to be embossed compared with display areas expressing other files), and a number matched to a relevant file group may be displayed at a check part. Alternatively, only the number matched to the relevant file group may be displayed at the check part. In contrast, a display area expressing a selected file may be displayed so as to be engraved (i.e., displayed so as to appear to be engraved compared with display areas expressing other files), and a number matched to a relevant file group may be displayed at a check part.

Alternatively, a big letter V (or a number, an alphabet letter, a symbol and the like) mark, a circle mark or a polygon mark for checking an entire display area expressing each file may be used to distinguish between the file groups, and simultaneously, the file groups may be displayed by using the marks having different colors. For example, the letter V may be displayed so as to be checked within a display area expressing each file selected as the first file group, and the big circle is displayed within a display area expressing each file selected as the second file group. Alternatively, the letter V may be displayed within a display area expressing each file selected as the first file group and within a display area expressing each file selected as the second file group, and simultaneously, the first and second file groups may be displayed by using the V letters having different colors.

In screen 402 of FIG. 4A, when the user completes the selection of a file group and clicks "move," the portable terminal 100 of the user switches to a mode enabling transition between folders. Screen 403 of FIG. 4A illustrates a state of automatically transitioning to a folder named "/sdcard" which is a root folder after the user clicks "move" in order to perform a file processing option in the screen 402 of FIG. 4A.

The file groups which have been obtained by grouping as described above need to transition to a second folder, which is a destination folder, in order to perform a file processing option of the file groups to a desired folder. For example, when a destination folder is a folder named "/sdcard/DCIM/move1 (i.e., the second folder)," screen 404 of FIG. 4A illustrates a state of transitioning from /sdcard to /sdcard/DCIM according to an input by the user. Screen 405 of FIG. 4B illustrates a state of transitioning to the second folder ("/sdcar/DCIM/move1") to which the file processing option of the relevant file groups is intended to be performed.

When the user performs the file processing option of the file groups to the second folder which is the destination folder, for example, when the user performs movement by pressing a key named "move to," files automatically transition to the first folder in a state where the files are not processed so as to be moved. Screen 406 of FIG. 4B illustrates a state in which a screen automatically transitions to the first folder. A file edit mode in which the file groups can be edited in a state where the file groups are not moved is displayed in the first folder including the files on which the file processing option is to be performed. Screen 406 of FIG. 4B illustrates an example of adding file 7 and file 13 to the second file group according to a selection by the user. For example, in the case of adding a file to the second file group, if the user presses a menu key and a pop-up window appears, the user selects the second file group from among file groups displayed in the pop-up window, and can add a file to the second file group in a file edit mode. In contrast, in the case of excluding a file from a file group, if the user once again presses a check button selected for the relevant file group in the file edit mode, the check mark disappears, and the user can exclude the relevant file from the relevant file group.

When the user presses a key (e.g., "move") matched to a file processing option in the first folder, the relevant file groups are moved to the second folder which is the destination folder. The relevant file groups are moved to folders after the folders, the number of which corresponds to the number of the relevant file groups, are generated under the second folder, and a screen image is displayed in the first folder on a screen, as illustrated in screen 407 of FIG. 4B. Referring to screen 407 of FIG. 4B, files which are not selected as the first file group, the second file group and the third file group and are not moved, are fixedly placed at the original positions thereof without any change in position. Accordingly, the visible intuitiveness of the user can be improved.

Screen 408 of FIG. 4B illustrates a state in which the first file group, the second file group and the third file group are respectively moved to folder 1, folder 2 and folder 3, after folder 1, folder 2 and folder 3 are automatically generated under the second folder. When the file processing option (particularly, movement) is performed, the three file groups are moved to their respective folders which have been generated for the three file groups. More specifically, the control unit 160 automatically generates a folder named "1" under the second folder which is the destination folder, and moves files of the first file group to the generated folder 1. The control unit 160 automatically generates a folder named "2" under the second folder, and moves files of the second file group to the generated folder 2. Also, the control unit 160 automatically generates a folder named "3" under the second folder, and moves files of the third file group to the generated folder 3. In other words, the files of the first file group are moved to a folder named "/sdcard/DCIM/move1/1," the files of the second file group are moved to a folder named "/sdcard/DCIM/move1/2," and the files of the third file group are moved to a folder named "/sdcard/DCIM/move1/3."

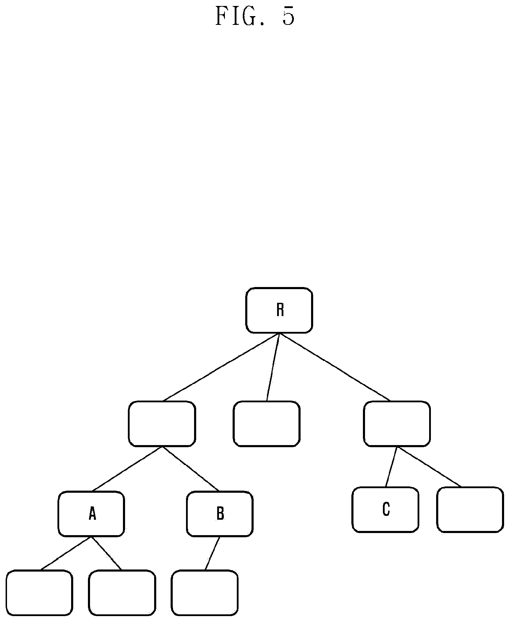

FIG. 5 is a view illustrating a folder structure in the form of a tree in a portable terminal according to an embodiment of the present invention.

Referring to FIG. 5, first, a distance between folder A and folder B is equal to 2. A distance between folder A and folder C is equal to 4. A distance between folder B and folder C is equal to 4. When the distance relations illustrated in FIG. 5 are applied to an embodiment of the present invention, a case is described in which folder A includes files on which a file processing option is to be performed, the file processing option is movement, and folder C is a destination folder to which the relevant files are intended to be moved. Meanwhile, when the number of times of transition between folders having a distance of 4 is equal to 4, the number of times of execution will be described as being equal to 4.

First, a file processing option named "movement" is selected in folder A, and a file group is created by selecting files. At this time, when a key (e.g., a movement key) matched to the file processing option is pressed, an automatic transition is made to folder R which is a root folder. The selection of the file processing option is regarded as a one-time execution, the selection of a file group is regarded as a one-time execution, and the press of the movement key is regarded as a one-time execution. Accordingly, the number of times of execution is regarded as being equal to 3.

Transition is made from folder R to folder C. At this time, because a tree distance between folder R and folder C is equal to 2, the number of times of execution is equal to 2. One-time execution is performed which selects folder C to which the files of each file group are to be moved. Then, automatically, transition is made to folder A and movement which is the relevant file processing option is performed. As a result, a total of seven (7) executions are performed.

Meanwhile, a process for transitioning to folder A after performing a file processing option according to the related art will be described below in order to compare the process with an embodiment of the present invention. First, in the process of the related art, a file processing option named "movement" is selected in folder A, and a file group is created by selecting files. At this time, when a movement key is pressed, an automatic transition is made to folder R which is a root folder. The selection of the file processing option is regarded as a one-time execution, the selection of a file group is regarded as a one-time execution, and the press of the movement key is regarded as a one-time execution. Accordingly, the number of times of execution is regarded as being equal to 3.

Transition is first made from a root folder to folder C. At this time, because a tree distance between folder R (i.e. the root folder) and folder C is equal to 2, the number of times of execution is equal to 2. One-time execution is performed which selects folder C. At this time, a file processing option of files including folder A to folder C is automatically performed. Again, because a tree distance between folder C and folder A is equal to 4, the number of times of execution is equal to 4. As a result, a total of ten (10) executions are performed in the process of the related art.

Therefore, according to an embodiment of the present invention, when the files of each file group are moved from folder A to folder C and the automatic transition is made back to folder A, seven (7) executions are performed. However, according to the related art, when the files of each file group are moved from folder A to folder C and the transition is made back to folder A, ten (10) executions are performed. In this regard, three executions can be eliminated, and thus time can be saved. Also, as described above, when a file processing option selection button (e.g., a movement button) is clicked in the second folder, an automatic transition is made to the first folder, and a file edit mode is displayed. Accordingly, after a file is added or excluded, a file processing option can be additionally performed. The positions of the relevant files are not automatically re-arranged but are fixedly placed, so that the user can utilize the positions and attributes of the files which have first been designated. Therefore, when the user processes a file, the intuitiveness of the user is improved.

When n represents the number of times of execution by which the process is reduced by the above-described configuration, "n" is expressed by Equation (1) below.

$$n = (a * N) - 1 \qquad \cdots \cdots \cdots \cdots \quad (1)$$

In Equation (1), "n" represents the reduced number of times of execution, "a" represents a tree distance, "N" represents the number of file groups, and "1" represents a constant that the user selects who finally performs an execution.

For example, according to an embodiment of the present invention as illustrated in FIG. 5, a total of seven (7) executions are performed, which include the selection of a file processing option, the selection of a file group, the press of a movement key, two transitions from folder R to folder C, the selection of folder C to which the files of each group are to be moved, and the execution of the movement. However, in the case of the process for transitioning to folder A after performing a file processing option according to the related art, a total of ten (10) executions are performed, which include the selection of a file processing option, the selection of a file, the press of a movement key, two transitions from folder R to folder C, the selection of folder C and the execution of movement, and four transitions from folder C to folder A. Therefore, according to an embodiment of the present invention, three executions or events can be eliminated. When the values of parameters in an embodiment of the present invention described with reference to FIG. 5 are substituted into Equation (1), because a tree distance between folder A and folder C is equal to 4 and the number of file groups is equal to 1, 4 and 1 are substituted into Equation (1). As a result, 3=(4*1)-1 is obtained. Accordingly, it can be noted that the reduced number of times of execution is equal to 3. As another example, when the number of file groups to be moved is equal to 3 and a tree distance between folder A and folder C is equal to 4, the reduced number of times of execution is equal to 11. In this regard, when a large number of file groups are processed according to a file processing option, files can be managed more quickly and more efficiently.

Although the above description has focused on the movement from among file processing options in an embodiment of the present invention, "n" representing the reduced number of times of execution as described above is identically applied to cases of performing movement, copy and transmission, but is not identically applied to cases of performing deletion, edit and reproduction. In this regard, after the deletion is performed, as described above, an area in which the deleted files have been placed is maintained in an empty state, and remaining files (i.e., undeleted files) maintain their respective forms, colors and placement structures, without any change, in a state where the remaining files are not arranged.

Also, file processing options which are respectively matched to all the file groups are simultaneously processed. For example, when the first file group is selected as being moved to the second folder, the second file group is selected as being deleted, the third file group is selected as being edited (e.g., in the case of a document file, a photograph file, and a moving image file), as the user causes a corresponding file processing option to be performed, the control unit 160 performs movement, deletion and edit on the respective file groups in a multitasking manner.

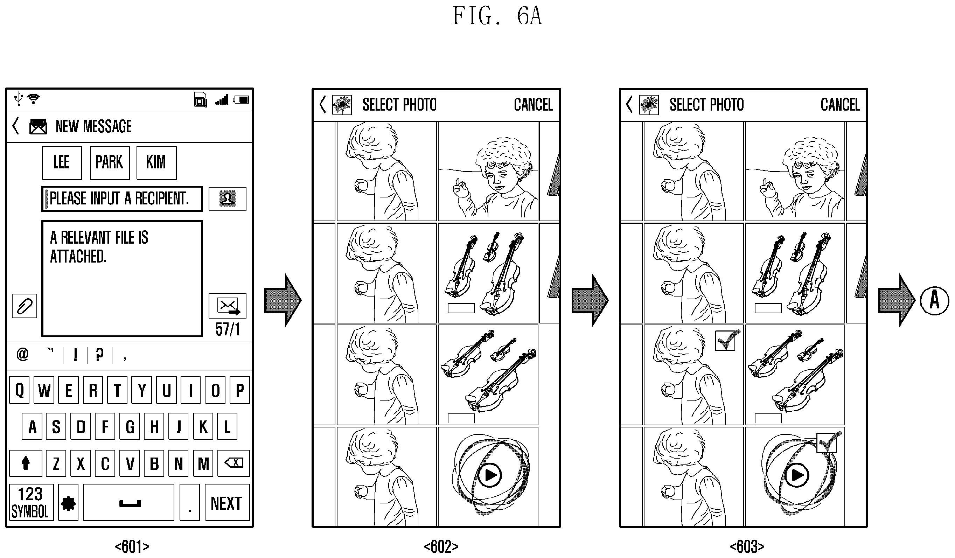

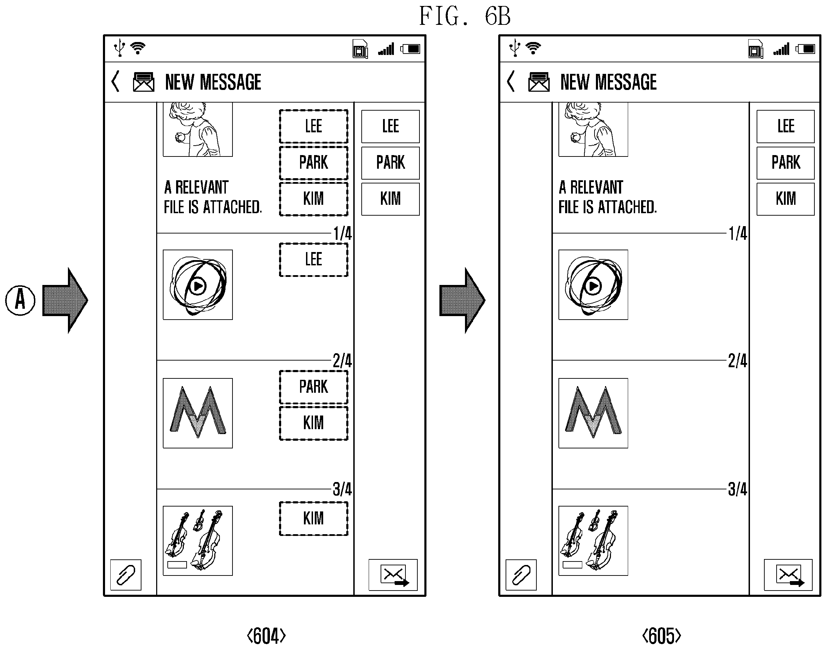

FIGs. 6A and 6B are screen views of a UI illustrating a process for transmitting files, the transmission of which has been selected, to other portable terminals according to an embodiment of the present invention.

Referring to screen 601 of FIG. 6A, the user of the portable terminal 100 selects a person named "LEE," a person named "PARK," and a person named "KIM," to whom a message and a file are to be transmitted, and intends to transmit a group message to portable terminals of the selected other users. Also, screen 601 of FIG. 6A illustrates a state in which the user of the portable terminal 100 inputs a group message reading "A relevant file is attached." A file is attached by clicking the clip-shaped file attachment button located beside a message input window in a state where the message is input. Screen 602 of FIG. 6A illustrates a state of transitioning to a folder including a file to be attached by clicking the file attachment button in the state illustrated in screen 601 of FIG. 6A.

Screen 603 of FIG. 6A illustrates an example in which the user of the portable terminal 100 selects files desired to be transmitted. In an example illustrated in screen 603 of FIG. 6A, four files are selected by screen scrolling, although only two files are checked as selected. When the user presses a completion button in order to complete the selection of files to be transmitted, a screen image is displayed as illustrated in screen 604 of FIG. 6B.

When, in a state illustrated in screen 604 of FIG. 6B, the user causes the names of the recipients to be separately displayed at the right side of the screen and drags and drops a desired recipient to a file to be transmitted, another portable terminal of the recipient who is to receive the file is designated. Screen 605 of FIG. 6B illustrates a state in which a file that the user is to transmit and a recipient who is to receive the file are designated. For example, referring to screen 605 of FIG. 6B, a first file of 4 files (for convenience of description, referred to as a "first file," a "second file," a "third file," and a "fourth file" in order from the top to the bottom) is transmitted to portable terminals of each of the recipients "LEE," "PARK," and "KIM," and the identical message "A relevant file is attached." is transmitted to the recipients "LEE," "PARK," and "KIM." The second file is transmitted only to the portable terminal of the recipient "LEE," the third file is transmitted to portable terminals of the recipients "PARK" and "KIM," and the fourth file is transmitted only to the portable terminal of the recipient "KIM." In other words, files that each recipient is to receive are as follows: the recipient "LEE" receives the first file and the second file, the recipient "PARK" receives the first file and the third file, and the recipient "KIM" receives the first file, the third file and the fourth file.

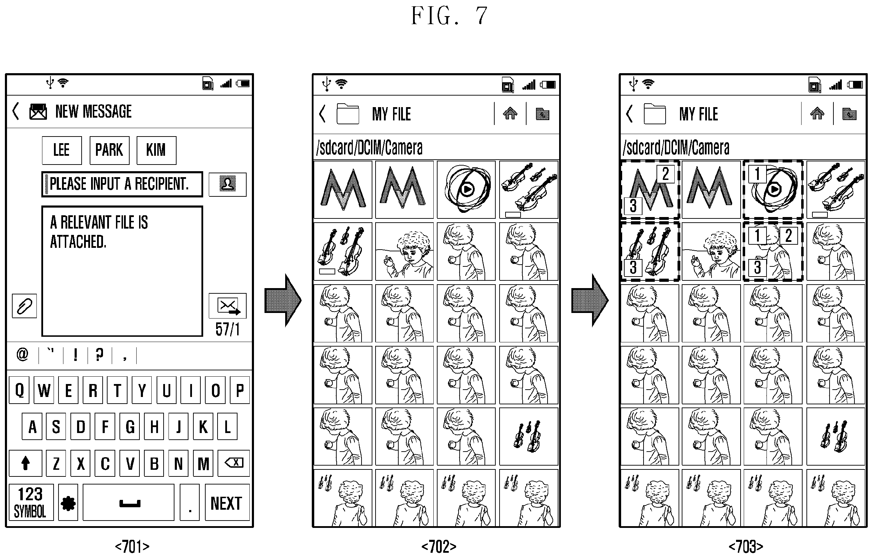

FIG. 7 is a view of a UI illustrating a process for transmitting files, the transmission of which has been selected, to other portable terminals according to another embodiment of the present invention. Screen 701 of FIG. 7 illustrates a state in which the user of the portable terminal 100 selects a person named "LEE," a person named "PARK," and a person named "KIM," to whom a message and a file are to be transmitted. Referring to screen 701 of FIG. 7, the user of the portable terminal 100 intends to transmit a group message to the selected persons.

The user of the portable terminal 100 attaches a file by clicking the clip-shaped file attachment button located beside a message input window in a state where the user of the portable terminal 100 inputs a message reading "A relevant file is attached." Screen 702 of FIG. 7 illustrates a state of transitioning to a folder including a file to be attached by clicking the file attachment button in the state illustrated in screen 701 of FIG. 7.

Screen 703 of FIG. 7 illustrates an example in which the user of the portable terminal 100 selects files desired to be transmitted. When the user of the portable terminal 100 selects the files, the portable terminal of LEE who is one of the recipients is set to receive a first file group, and the portable terminal of PARK is set to receive a second file group.

Lastly, the portable terminal of KIM is set to receive a third file group. In the example illustrated in screen 703 of FIG. 7, four files are selected. A left file from among two upper files is displayed as a file which simultaneously belongs to the second and third file groups and is to be transmitted to the portable terminal of PARK and the portable terminal of KIM. A right file from among the upper two files is displayed as a file which belongs to the first file group and is to be transmitted to the portable terminal of LEE. A left file from among two lower files is displayed as a file which belongs to the third file group and is to be transmitted to the portable terminal of KIM. A right file from among the two lower files is displayed as a file which simultaneously belongs to the first, second and third file groups and is to be transmitted to the portable terminals of LEE, PARK and KIM.

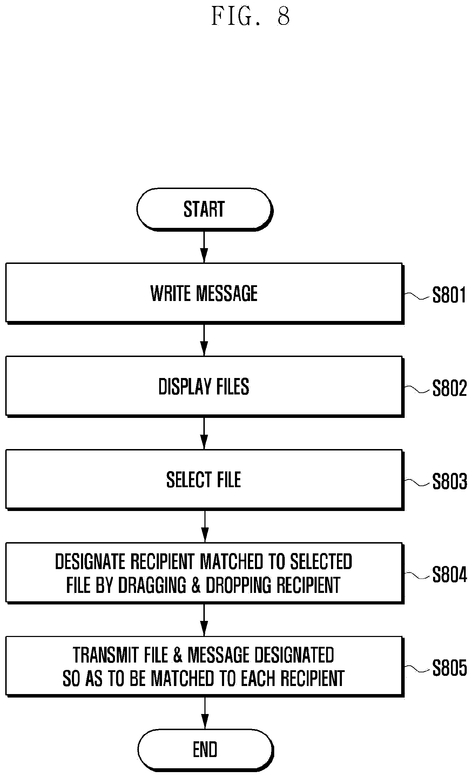

FIG. 8 is a flowchart illustrating a process for transmitting the selected files to multiple persons according to the process illustrated in FIG. 6, according to an embodiment of the present invention.

Referring to FIG. 8, in step S801, the user of the portable terminal 100 writes a message which is to be transmitted to a recipient. Step S801 may be performed as illustrated in screen 601 of FIG. 6A.

The user of the portable terminal 100 attaches a file by clicking a file attachment button and transitioning to a folder including the file to be attached. In step S802, the control unit 160 performs a control operation for displaying files in order to allow a user to select a file. Step S802 may be performed as illustrated in screen 602 of FIG 6A.

In step S803, the user of the portable terminal 100 selects desired files from among files. At this time, the user of the portable terminal 100 may select files while scrolling from one file to another in a folder or transitioning between folders. Step S803 may be performed as illustrated in screen 603 of FIG. 6A.

In step S804, the user of the portable terminal 100 drags and drops a recipient matched to the selected file, and thereby designates the recipient. Step S804 may be performed as illustrated in screens 604 and 605 of FIG. 6B.

In step S805, the control unit 160 performs a control operation for transmitting the file and message, which has been designated to be matched to each recipient, to each designated recipient.

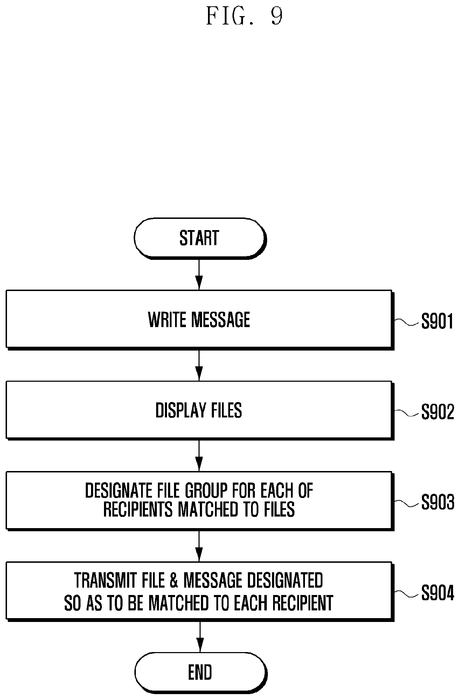

FIG. 9 is a flowchart illustrating a process for transmitting the selected files to multiple persons according to the process illustrated in FIG. 7, according to another embodiment of the present invention. Referring to FIG. 9, in step S901, the user of the portable terminal 100 writes a message which is to be transmitted to a recipient. Step S901 may be performed as illustrated in screen 701 of FIG. 7.

When the user of the portable terminal 100 clicks a file attachment button and transitions to a target folder including a file to be attached, in step S902, the control unit 160 performs a control operation for displaying files. Step S902 may be performed as illustrated in screen 702 of FIG. 7.

In step S903, the user of the portable terminal 100 designates a file group, which is matched to the portable terminal of each recipient, for the displayed files. For example, a first file group may be transmitted to the first portable terminal, and a second file group may be transmitted to the second portable terminal. In the present example, an identical file may be included in the first file group and the second file group. Step S903 may be performed as illustrated in screen 703 of FIG. 7. In step S904, the control unit 160 performs a control operation for transmitting the file and message, which has been designated to be matched to each recipient, to each designated recipient.

As described above, the method and the apparatus for processing a file in the portable terminal, according to embodiments of the present invention, enable the user to select multiple file groups, and to intuitively and easily use and process a desired file processing option for each file group.

Also, the method and the apparatus for processing a file in the portable terminal, according to embodiments of the present invention, enable the user to conveniently process file groups by classifying files according to a discrimination method depending on an input method and intuitively displaying the files during the selection of a file.

Also, according to embodiments of the present invention, intuitive stamp information can be used by fixedly displaying a form, a color and a placement structure of each file so as to enable the user to easily classify files even after a file processing option is performed, so that a time period for the selection of a file by the user can be reduced.

Further, according to embodiments of the present invention, after the user selects multiple file groups, the user can simultaneously perform multiple file processing options, so that the user can quickly process files.

Although the method and the apparatus for processing a file in the portable terminal, according to the embodiments of the present invention, have been described through the specification and drawings by using the specific terms, the embodiments and the terms are merely used as general meanings to clearly describe the technical contents of the present invention and help understanding of the present invention, and the present invention is not limited to the above-described embodiments.

**Claims**

**1.**   A method for processing at least one file in a portable terminal, the method comprising:

selecting (S203) a file processing option of one of moving, copying or transmitting the at least one file from a first folder of the portable terminal;
displaying (S204), in response to the file processing option selection, a file edit mode for the first folder in which the at least one file is capable of being added to a file group matched to the file processing option or being excluded therefrom;
receiving a user input for matching (S205) a file group to a file processing option;
in response to receiving a user input (S207), transition to a second folder of the terminal as a destination folder to which the selected file processing option of the file group is to be performed;
in response to receiving a first user input for processing (S208) the selected file processing option, storing a location of the second folder and displaying (S209) the file edit mode for the first folder; and
in response to receiving a second user input for processing the selected file processing option whilst displaying (S209) the file edit screen for the first folder, executing (S210), by the portable terminal, the file processing option of the file group.

2. The method of claim 1, wherein, in executing (S210) the file processing option, files of the first folder are placed at a corresponding display position to a display position prior to execution thereof when the execution is completed.

3. The method of claim 1, further comprising:
determining (S206), after matching (S205) the file group to the selected file processing option, whether another file group is designated to the file processing option which is different from the file group in the matching of the file group.

4. The method of claim 3, wherein in response to receiving a first user input for processing (S208) the selected file processing option, the method further comprises:

in the displayed (S209) file edit screen, editing the at least one file existing in the first folder;
entering (S304) a file processing option execution mode;
determining (S305) if multiple file groups have been designated (S206);
determining (S306) whether a folder, to which the file processing option of each of the file groups is to be performed, is designated for each of the file groups;
performing the file processing option of each of the file groups to the folder matched to each of the file groups, when it is determined that the folder is designated for each of the file groups; and
fixedly placing files, which remain after performing the file processing option, at respective corresponding display positions to a display position prior to execution thereof.

5. The method of claim 4, wherein editing the files further comprises:

determining (S302) whether the user has input a command for adding files to or excluding files from at least one of the file groups; and
adding the files to or excluding the files from the at least one of the file groups, when the user has input the command.

6. The method of claim 1, further comprising automatically generating subordinate folders, the number of which corresponds to the number of the file groups, under the second folder.

7. The method of claim 1, further comprising:
designating the file group for the selected files according to a number of times of touching the file, to a direction of dragging the file after touching the file, or to receive a shaking signal.

8. The method of claim 1, further comprising:

selecting files to be transmitted to the other portable terminals; and
designating at least one of the other portable terminals, which is to receive at least one of the selected files, for each of the selected files
wherein the executing (S210), by the portable terminal, the file processing option of the file group compries transmitting the files, which have been designated for each of the other portable terminals, to each of the other portable terminals.

9. The method of claim 8, further comprising designating file groups, which are respectively matched to the terminals, for files to be transmitted to the terminals.

10. The method of claim 9, wherein designating the file groups comprises:

separately displaying names of recipients, which are respectively matched to the other portable terminals; and designating the names of the recipients for each of the files to be transmitted, by dragging and dropping the names of the recipients to each of the files to be transmitted.

11. An apparatus for processing files in a portable terminal (100), the apparatus comprising:

a display unit (110);
an input unit (140);
a control unit (160);
wherein the apparatus is configured to :

display files and folders of the portable terminal (100);
display file groups matched to a file processing option of one of moving, copying or transmitting files from a first folder of the portable terminal (100); and
display a file edit mode for the first folder in which files are capable of being added to a file group or excluded therefrom;
receive a user input for matching a file group to a selected file processing option in such a manner as to distinguish the file groups from each other;
in response to receiving a user input, transition to a second folder of the portable terminal (100) as a destination folder to which the selected file processing option of the file group is to be performed; and
in response to receiving, at the input unit (140), a first user input for processing (S208) the selected file processing option, store a location of the second folder and control the display unit (110) to display the file edit screen for the first folder; and
in response to receiving, at the input unit (140), a second user input for processing the selected file processing option whilst controlling the display unit to display file edit mode for the first folder, execute, the file processing option of the file group.

12. The apparatus of claim 11, further comprising a sensor unit (150) connected to the control unit (160), the sensor unit including a gyro sensor and an acceleration sensor, and configured to cause a file, which has been selected by using at least one of the gyro sensor and the acceleration sensor, to be included in any one of the file groups.

13. The apparatus of claim 12, wherein the control unit (160) is configured to receive a shaking signal generated by the acceleration sensor, and to process the file groups according to the file processing option, and configured to classify a file, which has been selected by using at least two combinations of function keys of a key input unit and a touch through the display unit, to be included in any one of the file groups.

14. The apparatus of claim 11, wherein the control unit (160) is configured to classify a file to be included in any one of the file groups, according to the number of times of touching the file or to a direction of dragging the file after touching the file, when the file is selected by using a touch through the display unit (110).

**Patentansprüche**

1. Verfahren zum Verarbeiten von mindestens einer Datei in einem tragbaren Endgerät, wobei das Verfahren Folgendes umfasst::

Auswählen (S203) einer Dateiverarbeitungsoption von einem von Bewegen, Kopieren oder Übertragen der mindestens einen Datei aus einem ersten Ordner des tragbaren Endgeräts;
Anzeigen (S204), als Reaktion auf die Dateiverarbeitungsoptionsauswahl, eines Dateibearbeitungsmodus für den ersten Ordner, in dem die mindestens eine Datei in der Lage ist, einer Dateigruppe, die an die Dateiverarbeitungsoption angepasst ist, hinzugefügt zu werden oder von dort ausgeschlossen zu werden;
Empfangen einer Benutzereingabe zum Anpassen (S205) einer Dateigruppe an eine Dateiverarbeitungsoption;
als Reaktion auf das Empfangen einer Benutzereingabe (S207), Übergehen zu einem zweiten Ordner des Endgeräts als einen Zielordner, zu dem die ausgewählte Dateiverarbeitungsoption der Dateigruppe ausgeführt werden soll;
als Reaktion auf das Empfangen einer ersten Benutzereingabe zum Verarbeiten (S208) der ausgewählten Dateiverarbeitungsoption, Speichern einer Speicherstelle des zweiten Ordners und Anzeigen (S209) des Dateibearbeitungsmodus für den ersten Ordner; und

als Reaktion auf das Empfangen einer zweiten Benutzereingabe zum Verarbeiten der ausgewählten Dateiverarbeitungsoption während des Anzeigens (S209) des Dateibearbeitungsbildschirms für den ersten Ordner, Ausführen (S210), durch das tragbare Endgerät, der Dateiverarbeitungsoption der Dateigruppe.

2.  Verfahren nach Anspruch 1, wobei, beim Ausführen (S210) der Dateiverarbeitungsoption, Dateien des ersten Ordners an einer einer Anzeigeposition vor Ausführung davon entsprechenden Anzeigeposition angeordnet sind, wenn die Ausführung abgeschlossen ist.

3.  Verfahren nach Anspruch 1, ferner umfassend:
    Festellen (S206), nach Anpassen (S205) der Dateigruppe an die ausgewählte Dateiverarbeitungsoption, ob der Dateiverarbeitungsoption eine weitere Dateigruppe zugeordnet ist, die sich von der Dateigruppe in der Anpassung der Dateigruppe unterscheidet.

4.  Verfahren nach Anspruch 3, wobei, als Reaktion auf das Empfangen einer ersten Benutzereingabe zum Verarbeiten (S208) der ausgewählten Verarbeitungsoption, das Verfahren ferner Folgendes umfasst:

    im angezeigten (S209) Dateibearbeitungsbildschirm, Bearbeiten der mindestens einen im ersten Ordner vorhanden Datei;
    Eingeben (S304) eines Dateiverarbeitungsoptions-Ausführungsmodus;
    Ermitteln (S305), ob mehrere Dateigruppen zugeordnet (S206) worden sind;
    Feststellen (S306), ob ein Ordner, zu dem die Dateiverarbeitungsoption von jeder der Dateigruppen ausgeführt werden soll, für jede der Dateigruppen bestimmt ist;
    Ausführen der Dateiverarbeitungsoption für jede der Dateigruppen zum an jede der Dateigruppen angepassten Ordner, wenn festgestellt ist, dass der Ordner für jeder der Dateigruppen bestimmt ist; und
    Festes Anordnen von Dateien, die nach Ausführen der Dateiverarbeitungsoption an jeweiligen einer Anzeigeposition vor Ausführung davon entsprechenden Anzeigepositionen verbleiben.

5.  Verfahren nach Anspruch 4, wobei das Bearbeiten der Dateien ferner Folgendes umfasst:

    Feststellen (S302), ob der Benutzer einen Befehl eingegeben hat, mindestens einer der Dateigruppen Dateien hinzuzufügen oder von dieser auszuschließen; und
    der mindestens einen der Dateigruppen die Dateien hinzufügen oder von dieser ausschließen, wenn der Benutzer den Befehl eingegeben hat.

6.  Verfahren nach Anspruch 1, ferner umfassend automatisches Erzeugen von untergeordneten Ordnern, deren Anzahl der Anzahl der Anzahl Dateigruppen entspricht, unter dem zweiten Ordner.

7.  Verfahren nach Anspruch 1, ferner umfassend:
    Zuordnen der Dateigruppe für die ausgewählten Dateien, entsprechend einer Anzahl Male, die die Datei berührt wird, einer Richtung des Ziehens der Datei nach Berühren der Datei, oder um ein Schüttelsignal zu empfangen.

8.  Verfahren nach Anspruch 1, ferner umfassend:

    Auswählen von zu den anderen tragbaren Endgeräten zu übertragenden Dateien; und
    Bestimmen von mindestens einem der anderen tragbaren Endgeräten, das mindestens eine der ausgewählten Dateien empfangen soll, für jede der ausgewählten Dateien,
    wobei das Ausführen (S210), durch das tragbare Endgerät, der Dateiverarbeitungsoption der Dateigruppe das Übertragen der Dateien, die für jedes der anderen tragbaren Endgeräte bestimmt worden sind, an jedes der anderen tragbaren Endgeräte umfasst.

9.  Verfahren nach Anspruch 8, ferner umfassend Bestimmen von Dateigruppen, die jeweils den Endgeräten angepasst sind, für an die Endgeräte zu übertragende Dateien.

10. Verfahren nach Anspruch 9, wobei das Zuordnen der Dateigruppen Folgendes umfasst:

    separates Anzeigen von Empfängernamen, die jeweils den anderen tragbaren Endgeräten angepasst sind; und

Bestimmen der Namen der Empfänger für jede der zu übertragenden Dateien, durch Ziehen und Loslassen der Namen der Empfänger zu jeder der zu übertragenden Dateien.

11. Vorrichtung zum Verarbeiten von Dateien in einem tragbaren Endgerät (100), wobei die Vorrichtung Folgendes umfasst:

eine Anzeigeeinheit (110);
eine Eingabeeinheit (140);
eine Steuereinheit (160);
wobei die Vorrichtung ausgelegt ist, um:

Dateien und Ordner des tragbaren Endgeräts (100) anzuzeigen;
Dateigruppen anzuzeigen, die einer Dateiverarbeitungsoption von einer von Bewegen, Kopieren oder Übertragen von Dateien aus einem ersten Ordner des Endgeräts (100) angepasst sind; und
einen Dateibearbeitungsmodus für den ersten Ordner anzuzeigen, in dem Dateien in der Lage sind, einer Dateigruppe hinzugefügt oder von dort ausgeschlossen zu werden;
eine Benutzereingabe zu empfangen, um eine Dateigruppe an eine ausgewählte Dateiverarbeitungsoption auf solche Weise anzupassen, dass die Dateigruppen voneinander unterschieden werden;
als Reaktion auf das Empfangen einer Benutzereingabe, zu einem zweiten Ordner des Endgeräts (100) als einen Zielordner, zu dem die ausgewählte Dateiverarbeitungsoption der Dateigruppe ausgeführt werden soll, überzugehen; und
als Reaktion auf das Empfangen, an der Eingabeeinheit (140), einer ersten Benutzereingabe zum Verarbeiten (S208) der ausgewählten Dateiverarbeitungsoption, eine Speicherstelle des zweiten Ordners zu speichern und die Anzeigeeinheit (110) zu steuern, um den Dateibearbeitungsbildschirm für den ersten Ordner anzuzeigen; und
als Reaktion auf das Empfangen, an der Eingabeeinheit (140), einer zweiten Benutzereingabe zum Verarbeiten der ausgewählten Dateiverarbeitungsoption während des Steuerns der Anzeigeeinheit, um den Dateibearbeitungsmodus für den ersten Ordner anzuzeigen, die Dateiverarbeitungsoption der Dateigruppe auszuführen.

12. Vorrichtung nach Anspruch 11, ferner umfassend eine Sensoreinheit (150), die mit der Steuereinheit (160) verbunden ist, wobei die Sensoreinheit einen Gyro-Sensor und einen Beschleunigungssensor umfasst, und gestaltet ist, um zu bewirken, dass eine Datei, die durch Verwenden von mindestens einem von dem Gyro-Sensor und dem Beschleunigungssensor ausgewählt worden ist, in einer der Dateigruppen aufgenommen wird.

13. Vorrichtung nach Anspruch 12, wobei die Steuereinheit (160) gestaltet ist, um ein durch den Beschleunigungssensor erzeugtes Schüttelsignal zu empfangen, und die Dateigruppen entsprechend der Dateiverarbeitungsoption zu verarbeiten, und gestaltet ist, um eine Datei, die durch Verwenden von mindestens zwei Kombinationen von Funktionstasten einer Tasteneingabeeinheit und einer Berührung durch die Anzeigeeinheit ausgewählt worden ist, so einzuordnen, dass sie in einer der Dateigruppen aufgenommen wird.

14. Vorrichtung nach Anspruch 11, wobei die Steuereinheit (160) gestaltet ist, um eine Datei so einzuordnen, dass sie in einer der Dateigruppen aufgenommen wird, entsprechend der Anzahl Male, die die Datei berührt wird, oder einer Richtung des Ziehens der Datei nach Berühren der Datei, wenn die Datei durch Verwenden einer Berührung durch die Anzeigeeinheit (110) ausgewählt wird.

**Revendications**

1. Méthode de traitement d'au moins un fichier dans un terminal portable, la méthode comprenant :

la sélection (S203) d'une option de traitement de fichier parmi le déplacement, la copie ou la transmission de l'au moins un fichier depuis un premier dossier du terminal portable ;
l'affichage (S204), en réponse à la sélection de l'option de traitement de fichier, d'un mode d'édition de fichier pour le premier dossier dans lequel l'au moins un fichier est en mesure d'être ajouté à un groupe de fichiers correspondant à l'option de traitement de fichier, ou en étant exclu ;
la réception d'une entrée utilisateur pour assortir (S205) un groupe de fichiers à une option de traitement de fichier ;

en réponse à la réception d'une entrée utilisateur (S207), le passage à un deuxième dossier du terminal en tant que dossier de destination dans lequel doit se dérouler l'option sélectionnée de traitement de fichier du groupe de fichiers ;

en réponse à la réception d'une première entrée utilisateur pour le traitement (S208) de l'option sélectionnée de traitement de fichier, le stockage de l'emplacement du deuxième dossier, et l'affichage (S209) du mode d'édition de fichier pour le premier dossier ; et

en réponse à la réception d'une deuxième entrée utilisateur pour le traitement de l'option sélectionnée de traitement de fichier, tout en affichant (S209) l'écran d'édition de fichier pour le premier dossier, l'exécution (S210), par le terminal portable, de l'option de traitement de fichier du groupe de fichiers.

2. Méthode selon la revendication 1, dans laquelle, lors de l'exécution (S210) de l'option de traitement de fichier, des fichiers du premier dossier sont placés dans une position d'affichage correspondant à une position d'affichage antérieure à leur exécution, lors de l'achèvement de l'exécution.

3. Méthode selon la revendication 1, comprenant en outre :
la détermination (S206), après l'assortiment (S205) du groupe de fichiers à l'option de traitement de fichier sélectionnée, si un autre groupe de fichiers est désigné pour l'option de traitement de fichiers différent du groupe de fichiers pour l'assortiment du groupe de fichiers.

4. Méthode selon la revendication 3, dans laquelle, en réponse à la réception d'une première entrée utilisateur pour le traitement (S208) de l'option sélectionnée de traitement de fichier, la méthode comprend en outre :

dans l'écran d'édition de fichier affiché (S209), l'édition de l'au moins un fichier existant dans le premier dossier ;
l'entrée (S304) d'un mode d'exécution de l'option de traitement de fichier ;
la détermination (S305) si de multiples groupes de fichiers ont été désignés (S206) ;
la détermination (S306) si un dossier, dans lequel l'option de traitement de fichier de chacun des groupes de fichier doit être exécutée, est désigné pour chacun des groupes de fichiers ;
l'exécution de l'option de traitement de fichier de chacun des groupes de fichiers du dossier correspondant à chacun des groupes de fichiers, lorsqu'il a été déterminé que le fichier est désigné pour chacun des groupes de fichiers ; et
le placement de façon fixe de fichiers, restants après l'exécution de l'option de traitement de fichier, dans les positions d'affichage correspondantes respectives pour une position d'affichage préalablement à son exécution.

5. Méthode selon la revendication 4, l'édition des fichiers comprenant en outre :

la détermination (S302) si l'utilisateur a entré une commande pour ajouter des fichiers dans au moins un des groupes de fichiers, ou exclure des fichiers d'au moins un des groupes de fichiers ; et
l'adjonction des fichiers dans l'au moins un des groupes de fichiers ou l'exclusion de fichiers de l'au moins un des groupes de fichiers, lorsque l'utilisateur a entré la commande.

6. Méthode selon la revendication 1, comprenant en outre la production automatique de dossiers subordonnés, dont le nombre correspond au nombre de groupes de fichiers, sous le deuxième dossier.

7. Méthode selon la revendication 1, comprenant en outre :
la désignation du groupe de fichiers pour les fichiers sélectionnés en fonction du nombre de fois que le fichier a été touché, d'une direction de glissement du fichier après l'avoir touché, ou de la réception d'un signal de secousse.

8. Méthode selon la revendication 1, comprenant en outre :

la sélection des fichiers à transmettre aux autres terminaux portables ; et
la désignation d'au moins un des autres terminaux portables, qui doit recevoir au moins un des fichiers sélectionnés, pour chacun des fichiers sélectionnés, l'exécution (S210), par le terminal portable, de l'option de traitement de fichier du groupe comprenant
la transmission des fichiers, qui ont été désignés pour chacun des autres terminaux portables, à chacun des autres terminaux portables.

9. Méthode selon la revendication 8, comprenant en outre la désignation de groupes de fichiers, qui sont assortis respectivement aux terminaux, pour des fichiers à transmettre aux terminaux.

**10.** Méthode selon la revendication 9, la désignation des groupes de fichiers comprenant :

l'affichage séparé de noms de destinataires, assortis respectivement aux autres terminaux portables ; et
la désignation des noms de destinataires pour chacun des fichiers à transmettre, en glissant et déposant les noms des destinataires sur chacun des fichiers à transmettre.

**11.** Appareil pour le traitement de fichiers dans un terminal portable (100), l'appareil comprenant :

un dispositif d'affichage (110) ;
un dispositif d'entrée (140) ;
un dispositif de commande (160) ;
l'appareil étant configuré pour :

afficher des fichiers et des dossiers du terminal portable (100) ;
afficher des groupes de fichiers assortis à une option de traitement de fichiers assortis à une option de traitement de fichiers parmi les suivantes : déplacer, copier ou transmettre des fichiers d'un premier dossier du terminal portable (100) ; et
afficher un mode d'édition de fichiers pour le premier dossier dans lequel des fichiers sont en mesure d'être ajoutés dans un groupe de fichiers ou exclus de celui-ci ;
recevoir une entrée utilisateur pour assortir un groupe de fichiers à une option sélectionnée de traitement de fichiers de façon à pouvoir distinguer les groupes de fichiers les uns des autres ;
en réponse à la réception d'une entrée utilisateur, le passage à un deuxième dossier du terminal portable (100) en tant que dossier de destination dans lequel doit être exécutée l'option sélectionnée de traitement de fichiers du groupe de fichiers ; et
en réponse à la réception, au dispositif d'entrée (140), d'une première entrée utilisateur pour le traitement (S208) de l'option sélectionnée de traitement de fichiers, stocker un emplacement du deuxième dossier et commander le dispositif d'affichage (110) pour afficher l'écran d'édition de fichier pour le premier dossier ; et
en réponse à la réception, au dispositif d'entrée (140), d'une deuxième entrée utilisateur pour le traitement de l'option sélectionnée de traitement de fichiers, tout en commandant le dispositif d'affichage pour afficher le mode d'édition de fichier pour le premier dossier, exécuter l'option de traitement de fichiers du groupe du fichiers.

**12.** Appareil selon la revendication 11, comprenant en outre un capteur (150) connecté au dispositif de commande (160), le capteur comprenant un gyromètre et un capteur d'accélération, et étant configuré pour faire en sorte qu'un fichier, qui a été sélectionné à l'aide d'au moins un du gyromètre et du capteur d'accélération, soit inclus dans un quelconque des groupes de fichiers.

**13.** Appareil selon la revendication 12, le dispositif de commande (160) étant configuré d'une part pour recevoir un signal de secousse généré par le capteur d'accélération, et traiter les groupes de fichier en fonction de l'option de traitement de fichiers, d'autre part pour classifier un fichier, qui a été sélectionné en utilisant au moins deux combinaisons de touches de fonctions d'un dispositif d'entrée à touches et d'une touche dans le dispositif d'affichage, à incorporer dans un quelconque des groupes de fichiers.

**14.** Appareil selon la revendication 11, le dispositif de commande (160) étant configuré pour classifier un fichier devant être incorporé dans un quelconque des groupes de fichiers, selon le nombre de fois que l'on a touché le fichier, ou une direction de glissement du fichier après l'avoir touché, lors de la sélection du fichier à l'aide d'une touche par le biais du dispositif d'affichage (110).

FIG. 1

# FIG. 2

```
                        ( START )
                            │
                            ▼
S201 ──    ENTER FILE PROCESSING MODE

                            │
                            ▼
S202 ──    TRANSITION TO RELEVANT FILE FOLDER

                            │
                            ▼
S203 ──    SELECT FILE PROCESSING OPTION

                            │
                            ▼
S204 ──    ENTER FILE EDIT MODE

                            │
                            ▼
S205 ──    MATCH FILE PROCESSING OPTION TO FILE GROUP

                            │
                            ▼
S206 ──  < ADDITIONAL FILE GROUP, SELECTED? >  ── YES
                            │ NO
                            ▼
S207 ──    TRANSITION TO DESTINATION FOLDER
           TO WHICH FILE PROCESSING OPTION OF
           EACH FILE GROUP IS TO BE PERFORMED

                            │
                            ▼
S208 ──    CLICK FILE PROCESSING OPTION EXECUTION BAR

                            │
                            ▼
S209 ──    AUTOMATICALLY TRANSITION
           TO RELEVANT FILE FOLDER

                            │
                            ▼
S210 ──    PERFORM FILE PROCESSING OPTION

                            │
                            ▼
                        ( END )
```

## FIG. 3

```
START
  │
  ▼
┌─────────────────────────┐
│ ENTER FILE EDIT MODE    │──── S301
└─────────────────────────┘
  │
  ▼
      S302
 ◇ FILE, ADDED OR EXCLUDED? ◇────NO───┐
  │                                    │
  YES                                  │
  ▼                                    │
┌─────────────────────────┐           │
│ ADD OR EXCLUDE SELECTED  │── S303    │
│ FILES                    │           │
└─────────────────────────┘           │
  │                                    │
  ◄────────────────────────────────────┘
  ▼
┌─────────────────────────┐
│ ENTER FILE PROCESSING   │── S304
│ OPTION EXECUTION MODE    │
└─────────────────────────┘
  │
  ▼
      S305
 ◇ MULTIPLE FILE GROUPS? ◇────NO──────────────────┐
  │                                                │
  YES                                           S309
  ▼                           ┌──────────────────────────────────┐
      S306                    │ PERFORM FILE PROCESSING OPTION OF │
 ◇ IS FOLDER DESIGNATED ◇─NO─┐│ FILE GROUP TO DESTINATION FOLDER │
 ◇ FOR EACH FILE GROUP? ◇    │└──────────────────────────────────┘
  │                          │         S307            │
  YES          ┌─────────────────────────────────────┐│
  │            │ AUTOMATICALLY GENERATE FOLDERS SO AS ││
  │            │ TO CORRESPOND TO THE NUMBER OF FILE  ││
  │            │ GROUPS                               ││
  │            └─────────────────────────────────────┘│
  ◄─────────────────────────┘                         │
  ▼                                                    │
┌─────────────────────────────────────┐               │
│ PERFORM FILE PROCESSING OPTIONS OF   │── S308        │
│ ORRESPONDING FILE GROUPS TO          │               │
│ CORRESPONDING FOLDERS                │               │
└─────────────────────────────────────┘               │
  │                                                    │
  ◄────────────────────────────────────────────────────┘
  ▼
┌─────────────────────────────────────┐
│ FIXEDLY DISPLAY POSITIONS OF         │── S310
│ REMAINING FILES                      │
└─────────────────────────────────────┘
  │
  ▼
 END
```

# FIG. 4A

<401>  <402>  <403>  <404>

EP 2 787 424 B1

# FIG. 4B

FIG. 5

FIG. 6A

<601>

<602>

<603>

# FIG. 6B

<604>

<605>

EP 2 787 424 B1

# FIG. 7

<701>    <702>    <703>

EP 2 787 424 B1

# FIG. 8

```
          ┌─────────────┐
          │    START    │
          └──────┬──────┘
                 │
    ┌────────────▼────────────┐
    │      WRITE MESSAGE      │────S801
    └────────────┬────────────┘
                 │
    ┌────────────▼────────────┐
    │      DISPLAY FILES      │────S802
    └────────────┬────────────┘
                 │
    ┌────────────▼────────────┐
    │      SELECT FILE        │────S803
    └────────────┬────────────┘
                 │
    ┌────────────▼────────────────────┐
    │ DESIGNATE RECIPIENT MATCHED TO   │
    │   SELECTED FILE BY DRAGGING &    │────S804
    │      DROPPING RECIPIENT          │
    └────────────┬────────────────────┘
                 │
    ┌────────────▼────────────────────┐
    │ TRANSMIT FILE & MESSAGE          │
    │ DESIGNATED SO AS TO BE MATCHED   │────S805
    │      TO EACH RECIPIENT           │
    └────────────┬────────────────────┘
                 │
          ┌──────▼──────┐
          │     END     │
          └─────────────┘
```

FIG. 9

```
                    ┌─────────────┐
                    │    START    │
                    └──────┬──────┘
                           │
                           ▼
        ┌──────────────────────────────────────┐
        │           WRITE MESSAGE              │ ～ S901
        └──────────────────┬───────────────────┘
                           │
                           ▼
        ┌──────────────────────────────────────┐
        │           DISPLAY FILES              │ ～ S902
        └──────────────────┬───────────────────┘
                           │
                           ▼
        ┌──────────────────────────────────────┐
        │  DESIGNATE FILE GROUP FOR EACH OF    │ ～ S903
        │   RECIPIENTS MATCHED TO FILES        │
        └──────────────────┬───────────────────┘
                           │
                           ▼
        ┌──────────────────────────────────────┐
        │  TRANSMIT FILE & MESSAGE DESIGNATED  │ ～ S904
        │  SO AS TO BE MATCHED TO EACH RECIPIENT│
        └──────────────────┬───────────────────┘
                           │
                           ▼
                    ┌─────────────┐
                    │     END     │
                    └─────────────┘
```

**EP 2 787 424 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008250190 A